# EUROPÄISCHE PATENTSCHRIFT

(11) **EP 0 642 940 B1**
(45) Veröffentlichungstag und Bekanntmachung des Hinweises auf die Patenterteilung: **25.09.1996**
(21) Anmeldenummer: 94112229.3
(22) Anmeldetag: 04.08.1994
(51) Int. Cl.: B60J 5/04

(54) **Kraftfahrzeug mit wenigstens einer Tür**
Motor vehicle with at least one door
Véhicule automobile avec au moins une porte

(30) Priorität: 09.09.1993 DE 4330620
(43) Veröffentlichungstag der Anmeldung: 15.03.1995
(73) Patentinhaber: Bayerische Motoren Werke Aktiengesellschaft, 80788 München (DE)
(72) Erfinder: Reinhard, Manfred, D-85098 Grossmehring (DE); Speth, Bernhard, D-85283 Geroldshausen (DE)

(56) Entgegenhaltungen:
- EP-A- 0 302 044
- US-A- 3 887 227

## Beschreibung

Die Erfindung bezieht sich auf ein Kraftfahrzeug mit wenigstens einer Tür der im Oberbegriff des Patentanspruchs 1 genannten und aus der GB-PS 13 40 833 hervorgehenden Art.

Der aus dieser Druckschrift bekannte Personenkraftwagen hat an seinen beiden Seiten jeweils zwei nebeneinanderliegende Türen, in deren Hohlraum sich jeweils ein waagrecht verlaufendes Verstärkungsprofil befindet. Dieses ist jeweils an einem Endabschnitt mit dem Türscharnier verbunden, während an seinem gegenüberliegenden Endabschnitt zwei, die Türumfangswandung durchsetzende Fanghaken angebracht sind. Deren freie Hakenabschnitte durchragen in Schließlage der Fahrzeugtür jeweils eine in einem Karosseriepfosten vorgesehene Ausnehmung, so daß bei einem Seitencrash die Eindringtiefe der Fahrzeugtür in den Fahrzeuginnenraum vermindert wird. Nachdem aber der freie Hakenabschnitt des Fanghakens sehr tief in die zugeordnete Ausnehmung des Karosseriepfostens hineinragt, können sich bei einem starken Frontalcrash des Personenkraftwagens - wobei sich die Fahrzeugtüren verformen können - die Fanghaken mit dem Karosseriepfosten verkrallen, wodurch die Fahrzeugtür nicht mehr geöffnet werden kann.

Aufgabe der Erfindung ist es daher, einen an einer Fahrzeugtür vorgesehenen Fanghaken der im Oberbegriff des Patentanspruchs 1 genannten Art derart anzuordnen, daß sich bei einem starken Frontalzusammenstoß die Fahrzeugtür öffnen läßt, aber dennoch bei einer gegen diese gerichteten Krafteinwirkung eine allenfalls geringe Eindringtiefe der Fahrzeugtür in den Fahrzeuginnenraum entsteht.

Zur Lösung der Aufgabe sind die im Patentanspruch 1 dargelegten Merkmale vorgesehen.

Der Hakenabschnitt des Fanghakens hat erfindungsgemäß eine solche Längserstreckung, daß sein freies Ende in Schließlage der Fahrzeugtür im Bereich der Außenseite des Karosseriepfostens liegt. Ferner ist hierbei der Hakenabschnitt in einem größeren Abstand - nämlich mindestens etwa das Zehnfache der Blechdicke des Karosseriepfostens - von dem der Türanlenkung zugewandten Rand des Karosseriepfostens (B- und/oder C-Säule) entfernt vorgesehen. Durch diese Anordnung und Ausbildung des Hakenabschnitts des Fanghakens wird erreicht, daß bei einer gegen die Fahrzeugtür gerichteten Krafteinwirkung der Hakenabschnitt zunächst etwas nach außen, also vom Karosseriepfosten weg, verlagert wird und sodann das freie Ende des Hakenabschnitts über die Außenseite des Karosseriepfostens gleitet, wobei der Hakenabschnitt stetig etwas tiefer in dessen Blech eindringt. Durch die dabei entstehende hohe Reibwirkung zwischen dem Fanghaken und dem Karosseriepfosten wird die Eindringtiefe der Fahrzeugtür in den Fahrzeuginnenraum erheblich vermindert. Falls hierbei das freie Ende des Hakenabschnitts nach Art eines Hobelstahls spitzwinklig gestaltet ist, kann auf der Außenseite des Karosseriepfostens eine Einkerbung erzeugt werden, durch welche die Reibwirkung noch erheblich erhöht und damit die Eindringtiefe der Fahrzeugtür in den Fahrzeuginnenraum weiter vermindert wird. Ein weiterer Vorteil bei Erzeugung der Einkerbung besteht auch darin, daß sich hierbei an dem der Türanlenkung zugewandten Randbereich des Karosseriepfostens eine wulstartige Erhöhung ausbilden kann, an der der Hakenabschnitt des Fanghakens schließlich anliegt, wodurch das Eindringen der Fahrzeugtür in den Fahrzeuginnenraum ganz erheblich vermindert wird. Durch die erfindungsgemäße Anordnung des Fanghakens im Bereich des Karosseriepfostens ist schließlich auch gewährleistet, daß bei einem Frontalcrash des Kraftfahrzeugs die Fahrzeugtür geöffnet werden kann (Merkmale der Patentansprüche 1, 2 und 7).

Die wulstartige Erhöhung am Randbereich des Karosseriepfostens für das Zusammenwirken mit dem Hakenabschnitt des Fanghakens kann noch dadurch vergrößert werden, daß der Hakenabschnitt mit seinem freien Ende allenfalls bis etwa zum Sechsfachen der Blechdicke des Karosseriepfostens in eine in diesem vorgesehene Ausnehmung hineinragt. An der dabei sich bei einer Krafteinwirkung auf die Fahrzeugtür ausbildenden, verhältnismäßig großen wulstartigen Erhöhung liegt der Hakenabschnitt des Fanghakens zuverlässig an, so daß die Eindringtiefe der Fahrzeugtür in den Fahrzeuginnenraum sehr gering ist (Merkmale des Patentanspruchs 3).

Die am Karosseriepfosten vorgesehene Ausnehmung ist in ästhetisch ansprechender Weise muldenförmig gestaltet. In Schließlage der Fahrzeugtür ist hierbei zwischen dem freien Ende des Hakenabschnitts des Fanghakens und dem Außenumfang sowie dem Grund der Ausnehmung ein größerer Abstand vorgesehen. Dabei verläuft auch die Rückwand der muldenförmigen Ausnehmung schräg und in einem etwa parallelen Abstand zur schräg verlaufenden Rückseite des Hakenabschnitts. Hierdurch ist gewährleistet, daß bei einem Frontalzusammenstoß des Kraftfahrzeugs der Fanghaken vom Karosseriepfosten weg nach außen gedrückt wird, so daß die Fahrzeugtür stets geöffnet werden kann (Merkmale der Patentansprüche 4 und 9).

Der Fanghaken kann aus Stahl oder auch aus Leichtmetall bestehen und ist zweckmäßigerweise am Endabschnitt des Verstärkungsprofils festgeschraubt. Ferner kann der Fanghaken auch unlösbar am Verstärkungsprofil befestigt oder an diesem einstückig ausgebildet sein. In Schließlage der Fahrzeugtür verläuft die Mittellinie des Hakenabschnitts des Fanghakens in einem Winkel von etwa 10° bis 30° zu einer Fahrzeugquerebene bzw. einer Fahrzeuglängsebene, so daß bei einer Krafteinwirkung auf die Fahrzeugtür sich das freie Ende des Hakenabschnitts des Fanghakens optimal mit dem Karosseriepfosten verhaken kann. Zweckmäßigerweise ist der Fanghaken am unteren, freien Eckbereich der Fahrzeugtür angebracht und beeinflußt damit kaum deren optische Wirkung (Merkmale der Patentansprüche 5, 6 und 8).

Schließlich kann der Karosseriepfosten innenseitig zumindest im Umfangsbereich der Ausnehmung mit Blechverstärkungen versehen sein, durch die verhindert wird, daß das Blech des Karosseriepfostens beim Zusammenwirken mit dem Hakenabschnitt des Fanghakens ausgerissen wird.

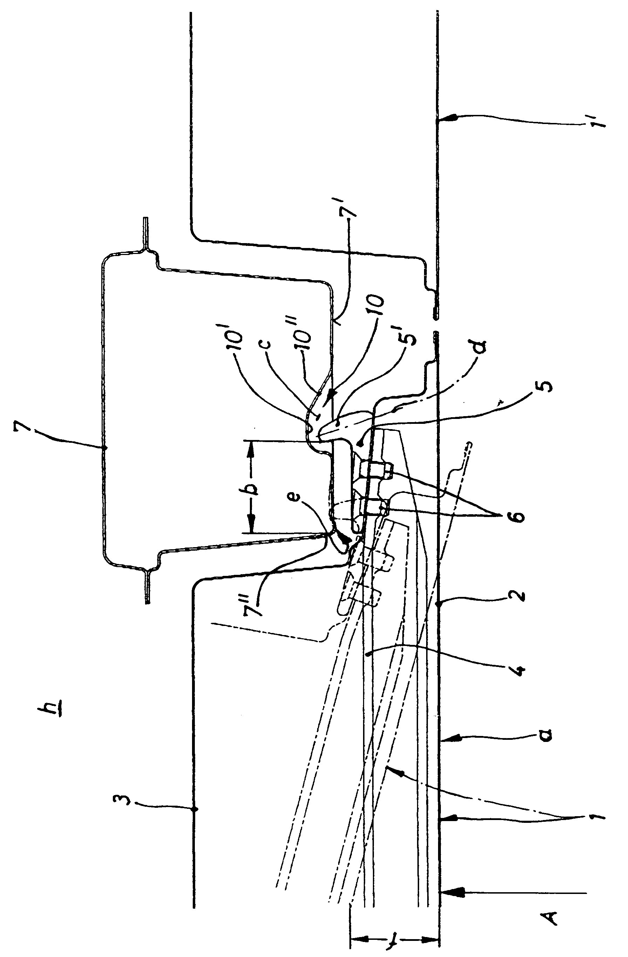

Ein Ausführungsbeispiel der Erfindung ist in der Zeichnung dargestellt und wird im folgenden erläutert. Diese zeigt einen waagrechten Schnitt am hinteren, unteren Randbereich einer seitlichen Fahrzeugtür in deren Schließlage mit einem Fanghaken im Bereich eines Karosseriepfostens.

Die in der Zeichnung dargestellte Fahrzeugtür 1 befindet sich an einem Personenkraftwagen vorne links (Fahrertür), wobei sich an diese eine hintere Fahrzeugtür 1' anschließt. Dabei besteht der Türkörper der Fahrzeugtür 1 im wesentlichen aus einem Türaußenblech 2 und einem Türinnenblech 3. Diese umgeben einen Hohlraum, in dem sich ein aus Stahl oder Leichtmetall bestehendes Verstärkungsprofil 4 befindet. Dabei erstreckt sich das Verstärkungsprofil 4 entweder etwa waagrecht über die ganze Türbreite oder verläuft, wie beim vorhandenen Ausführungsbeispiel, etwa diagonal vom Bereich eines Türscharniers zum hinteren, unteren Eckbereich der Fahrzeugtür 1, wobei an deren freiem Randbereich am Verstärkungsprofil 4 ein Fanghaken 5 durch zwei Schrauben 6 befestigt ist. Der Fanghaken 5 hat einen von der Fahrzeugtür 1 abstehenden Hakenabschnitt 5' der in Schließlage a der Fahrzeugtür 1 einem Karosseriepfosten 7 (B-Säule) zugewandt ist.

Wie in der Zeichnung ersichtlich, ist an der Außenseite 7' des Karosseriepfostens 7 eine muldenförmige Ausnehmung 10 vorgesehen, in die das freie Ende des Hakenabschnitts 5' des Fanghakens 5 in Schließlage a der Fahrzeugtür 1 etwa um das Sechsfache der Blechdicke des Karosseriepfostens 7, also um etwa 4 bis 5 mm, hineinragt. Es besteht auch die Möglichkeit, daß in Schließlage a der Fahrzeugtür 1 das freie Ende des Hakenabschnitts 5' etwa in der Ebene der zugewandten Außenseite 7' des Karosseriepfostens 7 liegt. Schließlich ist in Schließlage a der Fahrzeugtür 1 der Hakenabschnitt 5' des Fanghakens 5 um ein Maß b von dem der Türanlenkung zugewandten Rand 7'' des Karosseriepfostens 7 zurückgesetzt. Dabei beträgt das Maß b mindestens etwa das Zehnfache der Blechdicke des Karosseriepfostens 7 und damit mindestens etwa 8 bis 10 mm. In der Zeichnung ist ferner zu ersehen, daß in Schließlage a der Fahrzeugtür 1 zwischen dem freien Ende des Hakenabschnitts 5' des Fanghakens 5 und dem Außenumfang sowie dem Grund 10' der Ausnehmung 10 ein größerer Abstand c vorgesehen ist. Dabei verläuft auch die Rückwand 10'' der muldenförmigen Ausnehmung 10 schräg, also in einem spitzen Winkel zur Außenseite 7' des Karosseriepfostens 7 und damit in einem etwa parallelem Abstand zur schräg verlaufenden Rückseite des Hakenabschnitts 5'.

Der Fanghaken 5 besteht aus Stahl oder Leichtmetall, wobei die Mittellinie d des Hakenabschnitts 5' in Schließlage a der Fahrzeugtür 1 in einem Winkel von etwa 10° bis 30° zu einer Fahrzeugquerebene verläuft. Zur Vermeidung von Verletzungen ist schließlich das freie Ende des Hakenabschnitts 5' abgerundet ausgebildet.

Bei einer gegen die Fahrzeugtür 1 etwa in Pfeilrichtung A gerichteten Krafteinwirkung aufgrund eines Seitencrashs oder dergleichen wird das freie Ende des Hakenabschnitts 5' zunächst etwas nach außen, also von der Außenseite 7' des Karosseriepfostens 7 weg verlagert; sodann gleitet das freie Ende des Hakenabschnitts 5' des Fanghakens 5 über die Außenseite 7' des Karosseriepfostens 7 und dringt dabei stetig etwas tiefer in dessen Blech ein, wie in der Zeichnung mit strichpunktierten Linien dargestellt ist. Durch die dabei entstehende hohe Reibwirkung zwischen dem Fanghaken 5 und dem Karosseriepfosten 7 wird die Eindringtiefe f (mit strichpunktierten Linien dargestellt) der Fahrzeugtür 1 in den Fahrzeuginnenraum h erheblich vermindert. Beim geschilderten Längsverlagern des freien Endes des Hakenabschnitts 5' kann sich am Rand 7'' des Karosseriepfostens 7 eine wulstartige Erhöhung e ausbilden, an der schließlich der Hakenabschnitt 5' des Fanghakens 5 anliegt, was ebenfalls zu einem erheblich verminderten Eindringen der Fahrzeugtür 1 in den Fahrzeuginnenraum h beiträgt.

Bei einem Frontalcrash des Personenkraftwagens kann die Fahrzeugtür 1 gegen den Karosseriepfosten 7 gepreßt werden. Dabei kann die in bezug auf eine Fahrzeugquerebene schräg verlaufende Rückseite des Hakenabschnitts 5' des Fanghakens 5 gegen die Rückwand 10'' der muldenförmigen Ausnehmung 10 gepreßt werden. Da die Rückwand 10'' mit der Außenseite 7' des Karosseriepfostens 7 einen spitzen Winkel einschließt, wird hierbei der Fanghaken 5 etwas nach außen geschoben, so daß die Fahrzeugtür 1 geöffnet werden kann. Hierzu trägt auch der allseitig zwischen dem freien Ende des Hakenabschnitts 5' und der muldenförmigen Ausnehmung 10 vorgesehene größere Abstand c bei.

## Patentansprüche

1. Kraftfahrzeug mit wenigstens einer Tür, an deren freiem Randbereich sich mindestens ein Fanghaken befindet, wobei dieser in Schließlage der Fahrzeugtür einem Karosseriepfosten zugeordnet ist,
dadurch gekennzeichnet, daß das freie Ende (5') des Fanghakens (5) in Schließlage (a) der Fahrzeugtür (1) nahe der zugewandten Außenseite (7') des Karosseriepfostens (7) liegt und bei einer quer gegen die Fahrzeugtür (1) gerichteten Kraft (Pfeilrichtung A) mit Reibschluß sowie unter verformung des Blechs der Außenseite (7') mit dem Karosseriepfosten (7) zusammenwirkt.

2. Kraftfahrzeug nach Anspruch 1, dadurch gekennzeichnet, daß das freie Ende (5') des Fanghakens (5) in einem größeren Abstand (Maß b) von dem der Türanlenkung zugewandten Rand (7'') des Karosseriepfostens (7) zurückgesetzt ist.

3. Kraftfahrzeug nach Anspruch 2, dadurch gekennzeichnet, daß das freie Ende (5') des Fanghakens (5) nur bis etwa zum Sechsfachen der Blechdicke des Karosseriepfostens (7) in dessen Ausnehmung (10) hineinragt.

4. Kraftfahrzeug nach Anspruch 3, dadurch gekennzeichnet, daß die am Karosseriepfosten (7) vorgesehene Ausnehmung (10) muldenförmig gestaltet ist, wobei in Schließlage (a) der Fahrzeugtür (1) zwischen dem freien Ende (5') des Fanghakens (5) und dem Außenumfang sowie dem Grund (10') der Ausnehmung (10) jeweils ein größerer Abstand (c) vorgesehen ist.

5. Kraftfahrzeug nach Anspruch 1, dadurch gekennzeichnet, daß der Fanghaken (5) aus Stahl oder aus Leichtmetall besteht.

6. Kraftfahrzeug nach Anspruch 1, dadurch gekennzeichnet, daß der Fanghaken (5) mit einem Verstärkungsprofil (4) der Fahrzeugtür (1) verschraubt ist.

7. Kraftfahrzeug nach Anspruch 2, dadurch gekennzeichnet, daß das freie Ende (5') des Fanghakens (5) in Schließlage (a) der Fahrzeugtür (1) mindestens um etwa das Zehnfache der Blechdicke des Karosseriepfostens (7) von dessen der Türanlenkung zugewandtem Rand (7'') zurückgesetzt ist (Maß b).

8. Kraftfahrzeug nach Anspruch 1, dadurch gekennzeichnet, daß die Mittellinie (d) des freien Endes (5') des Fanghakens (5) in Schließlage (a) der Fahrzeugtür (1) bei einer Seitentür in einem Winkel von etwa 10° bis 30° zu einer Fahrzeugquerebene und bei einer heckseitigen Fahrzeugtür zu einer Fahrzeuglangsebene verläuft.

9. Kraftfahrzeug nach Anspruch 4, dadurch gekennzeichnet, daß bei einer seitlichen Fahrzeugtür (1) die Rückseite des freien Endes (5') des Fanghakens (5) in bezug auf eine Fahrzeugquerebene schräg nach hinten außen und dabei in etwa parallelem Abstand zur Rückwand (10'') der muldenförmigen Ausnehmung (10) verläuft.

## Claims

1. A motor vehicle with at least one door having a free end region on which at least one catch hook is disposed, the book being associated with an upright member of the vehicle body when the vehicle door is closed,
characterised in that when the door (1) is in the closed position (a) the free end (5') of the hook (5) lies near the facing outer side (7') of the upright (7), and in the event of a force directed transversely against the door (1) (in the direction of arrow A) the free end co-operates with the upright (7), with frictional engagement and deformation of the sheet-metal outer side (7').

2. A vehicle according to claim 1, characterised in that the free end (5') is set back a relatively long distance (dimension b) from the edge (7'') of the upright (7) facing the door hinge.

3. A vehicle according to claim 2, characterised in that the free end (5') of the hook (5) projects into the recess (10) only up to about six times the thickness of the sheet metal forming the upright (7).

4. A vehicle according to claim 3, characterised in that the recess (10) formed on the upright (7) is trough-shaped, and when the door (1) is in the closed position (a) a relatively large space (c) is provided between the free end (5') of the hook (5) and the outer periphery and base (10') of the recess (10).

5. A vehicle according to claim 1, characterised in that the hook (5) is of steel or light metal.

6. A vehicle according to claim 1, characterised in that the hook (5) is secured to a section member (4) reinforcing the vehicle door (1).

7. A vehicle according to claim 2, characterised in that when the door (1) is in the closed position (a), the free end (5') of the hook (5) is set back by at least about ten times the thickness of the metal forming the upright (7) from the edge (7'') thereof facing the door hinge (dimension b).

8. A vehicle according to claim 1, characterised in that when the door (1) is in the closed position (a), the centre line (d) of the free end (5') of the hook (5) extends at an angle of about 10° to 30° to a transverse plane of the vehicle in the case of a side door and extends to a longitudinal plane through the vehicle in the case of a rear door.

9. A vehicle according to claim 4, characterised in that in the case of a side door (1), the back of the free end (5') of the hook (5) extends backward at an angle relative to a transverse plane of the vehicle and approximately parallel to the back wall (10'') of the trough-shaped recess (10).

## Revendications

1. Véhicule automobile comportant au moins une porte dont la zone de bord libre est munie d'au moins un crochet qui est associé en position de fermeture de la porte du véhicule à un montant de la carrosserie,
caractérisé en ce que
l'extrémité libre (5') du crochet (5) en position de fermeture (a) de la porte (1) se trouve à proximité du côté extérieur adjacent (7') du montant de carrosserie (7) et sous l'effet d'une force transversale appliquée contre la porte (1) du véhicule (direction de la flèche A), cette extrémité libre coopère en friction et coopère avec le montant (7) de la carrosserie en déformant la tôle du côté extérieur (7').

2. Véhicule automobile selon la revendication 1,
caractérisé en ce que
l'extrémité libre (5') du crochet (5) est en retrait d'une distance plus importante (mesure b) du bord (7'') du montant de carrosserie (7) tourné vers l'articulation de porte.

3. Véhicule automobile selon la revendication 2,
caractérisé en ce que
l'extrémité libre (5') du crochet (5) ne pénètre que sensiblement jusqu'à six fois l'épaisseur de la tôle du montant de carrosserie (7) dans sa cavité (10).

4. Véhicule automobile selon la revendication 3,
caractérisé en ce que
la cavité (10) prévue dans le montant (7) de la carrosserie est en forme de goulotte et en position de fermeture (a) de la porte (1) du véhicule, entre l'extrémité libre (5') du crochet (5) et la périphérie ainsi que le fond (10') de la cavité (10), on a prévu chaque fois un intervalle relativement grand (c).

5. Véhicule automobile selon la revendication 1,
caractérisé en ce que
le crochet (5) est en acier ou en un métal léger.

6. Véhicule automobile selon la revendication 1,
caractérisé en ce que
le crochet (5) est vissé sur un profilé de renforcement (4) de la porte de véhicule (1).

7. Véhicule automobile selon la revendication 2,
caractérisé en ce que
l'extrémité libre (5') du crochet (5) en position de fermeture (a) de la porte (1), est en retrait au moins d'environ dix fois l'épaisseur de la tôle du montant de carrosserie (7) par rapport au bord (7'') du côté de l'articulation de porte (mesure b).

8. Véhicule automobile selon la revendication 1,
caractérisé en ce que
la ligne d'axe (d) de l'extrémité libre (5') du crochet (5) en position de fermeture (a) de la porte (1) du véhicule passe par une porte latérale suivant un angle environ de 10° à 30° dans un plan de véhicule et pour une porte de véhicule, arrière, jusqu'à un plan longitudinal du véhicule.

9. Véhicule automobile selon la revendication 4,
caractérisé en ce que
dans le cas d'une porte latérale (1) de véhicule, le côté arrière de l'extrémité libre (5') du crochet d'accrochage (5) est dirigé par rapport à un plan transversal du véhicule, en biais vers l'arrière et l'extérieur et ainsi à une distance parallèle par rapport à la paroi arrière (10'') de la cavité (10) en forme de goulotte.
